# EUROPÄISCHE PATENTSCHRIFT

(11) **EP 2 742 578 B1**
(45) Veröffentlichungstag und Bekanntmachung des Hinweises auf die Patenterteilung: **17.05.2017**
(21) Anmeldenummer: 11723416.1
(22) Anmeldetag: 24.05.2011
(51) Int. Cl.: H02K 1/20, H02K 5/24, H02K 9/19

(54) **DYNAMOELEKTRISCHE MASCHINE MIT EINEM SELBSTTRAGENDEN GEHÄUSE**
DYNAMO-ELECTRIC MACHINE COMPRISING A SELF-SUPPORTING HOUSING
MACHINE DYNAMOÉLECTRIQUE À BOÎTIER AUTOPORTEUR

(43) Veröffentlichungstag der Anmeldung: 18.06.2014
(73) Patentinhaber: Siemens Aktiengesellschaft, 80333 München (DE)
(72) Erfinder: GRILLENBERGER, Reiner, 91575 Windsbach (DE); KOCH, Thomas, 90459 Nürnberg (DE); SINDELKA, Martin, 90478 Nürnberg (DE); WERNER, Ulrich, 91088 Bubenreuth (DE)
(86) Internationale Anmeldenummer: PCT/EP2011/058406
(87) Internationale Veröffentlichungsnummer: WO 2012/159660

(56) Entgegenhaltungen:
- DE-A1-102006 005 316
- DE-B- 1 213 040
- US-A- 5 365 132
- US-A1- 2006 066 159

## Beschreibung

Die Erfindung betrifft eine dynamoelektrische Maschine mit einem selbsttragenden Gehäuse, das einen Blechpaketabschnitt aufweist.

Es gibt eine Vielzahl von Motorkonzepten für Luft- und Wasserkühlung, für das Anbringen des Klemmkastens, für die Anordnung von Lagern, als auch für eine konkrete Ausgestaltung der Kühlung einer dynamoelektrischen Maschine. So ist eine Luftkühlung einer dynamoelektrischen Maschine aus der EP 0 387 743 A1 bekannt. In der DE 197 42 255 C1 ist eine gehäuselose Drehstrommaschine mit achsparallelen Kühlrohren in einem Ständerblechpaket beschrieben. Weiterhin sind flüssigkeitsgekühlte elektrische Maschinen beispielsweise aus der
US 5 084 642 A und der DE 91 12 631 U1 bekannt, wobei dabei in die Lagerschilde Umlenkungen und Ein- und Auslaufstutzen eingegossen sind. Eine gehäuselose elektrische Maschine ist außerdem aus der AT 170 766 bekannt, deren Bleche Kühl- und Fußfortsätze aufweisen.

Gehäuselose elektrische Maschinen weisen eine mangelnde Steifigkeit des Blechpakets auf und sind zur Lagerung der Welle mit Topflagerschilden zu versehen, die vergleichsweise aufwändig herzustellen und damit vergleichsweise teuer sind.

Dynamoelektrische Maschinen mit Gehäuse führen zu einer Vergrößerung des Aktivteils, da unter anderem die Kühlung nicht im gleichen Maße wie bei einer gehäuselosen dynamoelektrischen Maschine gegeben ist.

Die US 5 365 132 A beschäftigt sich mit einer verbesserten Kühlanordnung für eine dynamoelektrische Maschine, die einen aus einer Vielzahl von geschichteten Blechen gebildeten Statorkern aufweist. Die geschichteten Bleche haben eine zentrale Bohrung für einen Rotor und mehrere im gleichmäßigen Abstand angeordnete Wicklungsnuten, die sich von der Bohrung radial nach außen erstrecken und an einem Ende wenigstens teilweise durch die Bleche begrenzt sind. Benachbarte Nuten bilden Polstücke, die sich von der Bohrung in einen radial äußeren Abschnitt von den Blechen erstrecken. Mehrere Kühlluftkanäle verlaufen in axialer Richtung durch die gestapelten Bleche im Allgemeinen parallel zu der zentralen Bohrung. Die Kühlluftkanäle sind jeweils benachbart zu dem begrenzenden Ende von einer entsprechenden Wicklungsnut angeordnet und jeder Kühlluftkanal hat eine radial äußere Form, die einer radial äußeren Form der Wicklungsnuten im Allgemeinen entspricht. Vorzugsweise erstreckt sich jeder Kühlluftkanal in Umfangsrichtung zwischen zwei Radiuslinien von der Maschine in gleicher Ausdehnung wie die gegenüberliegenden kreisförmigen Kanten der entsprechenden Wicklungsnut und jeder Luftkanal hat bei einer axialen Betrachtung eine Mondform, d.h. eine Sichelform. Jeder Luftkanal ist so angeordnet, dass Effekte auf die elektromagnetischen Flusslinien in den geschichteten Blechen minimiert werden. Das Verschieben der Kühlluftkanäle vom äußeren Umfang näher zu den Wicklungsnuten wird vorgeschlagen, da eine Vergrößerung der Querschnittsfläche der Kühlluftkanäle am äußeren Umfang der Bleche den Wärmefluss von den Blechen zum äußeren Gehäuse oder Schale nachteilig blockiert.

Ausgehend davon liegt der Erfindung die Aufgabe zugrunde, die oben genannten Nachteile zu vermeiden. Des Weiteren soll unter Berücksichtigung, insbesondere der neuen Wirkungsgradklassen eine dynamoelektrische Maschine, insbesondere für die Niederspannungsebene geschaffen werden, die vergleichsweise einfach herstellbar ist.

Die Lösung der gestellten Aufgabe gelingt durch eine dynamoelektrische Maschine mit einem selbsttragenden Gehäuse gemäß Patentanspruch 1.

Die das Blechpaket des Stators bildenden axial hintereinander angeordneten Bleche weisen an ihren äußeren Seiten - von den Anlagebereichen abgesehen - oberflächenvergrößernde Strukturen auf. Damit wird die Kühleffizienz gesteigert.

Diese dynamoelektrische Maschine weist ein selbsttragendes Gehäuse auf, das einen einfachen eckigen Blechpaketabschnitt aufweist, der ein eckiges Blechpaket umfasst. Des Weiteren weist das selbsttragende Gehäuse in axialer Verlängerung des Blechpaketsabschnitts zumindest einen Anschlussabschnitt auf. Bei mehreren Anschlussabschnitten sind diese vorteilhafterweise beidseitig an den axialen Enden des Blechabschnitts angeordnet.

Erfindungsgemäß sind nunmehr die Aufgaben des selbstragenden Gehäuses klar festgelegt und umrissen. Damit ergibt sich ein Plattformkonzept, das nunmehr ermöglicht, einzelne Ausführungsformen (beispielsweise Flüssigkeitskühlung mit Geräuschdämmung und Rückkühler an der Maschine etc.) in einfacher Art und Weise zu realisieren, ohne ein neues Maschinenkonzept zu entwerfen und konstruktiv umzusetzen.

Dies beschleunigt beispielsweise die Durchlaufzeiten bei einer Maschinenbestellung.

Somit wird in einfacher Art und Weise ein Plattformkonzept für dynamoelektrische Maschinen gewährleistet. Dies ist vor allem für leistungsstarke Maschinen im Niederspannungsbereich - also unter 1000V Nennspannung - besonders interessant, da dort dynamoelektrische Maschinen für unterschiedlichste Einsatzzwecke vorgesehen sind.

So dient der Blechpaketabschnitt des selbsttragenden Gehäuses der Fixierung des Blechpakets eines Stators über die festgelegten Anlagebereiche zwischen Blechpaketabschnitt des Gehäuses und Blechpaket. Diese Anlagebereiche dienen insbesondere als Drehmomentenstütze und/oder zur Paketierung des Blechpakets. Ebenso sind dort die Kurzschlussmomente aufzunehmen.

In einer weiteren Ausführungsform sind die Seitenflächen des Blechpaketsabschnitts des Gehäuses offen, so dass lediglich ein Rahmen, ggf. durch ein oder mehrere Streben gestützt, die oben genannten Aufgaben erfüllt. Der Blechpaketabschnitt weist somit in seiner rudimentärsten räumliche Grundform ein regelmäßiges Prisma mit verstärkten Kanten und den Anlagebereichen auf.

Der Anschlussabschnitt des Gehäuses ist in axialer Verlängerung unmittelbar und direkt am Blechpaketabschnitt angeordnet. Anschlussabschnitt und Blechpaketabschnitt sind vorteilhafterweise aus einem Material, und insbesondere einstückig ausgeführt.

Das selbstragende Gehäuse mit seinem Blechpaketabschnitt und seinem Anschlussabschnitt ist äußerst einfach aufgebaut und besteht nur aus wenigen Grundelementen. Diese können aus Stahl, Stahlguss oder Grauguss oder auch aus Aluminium gefertigt sein.

Sämtliche Anschlussmöglichkeiten von Zusatzvorrichtungen und/oder Hilfsaggregaten, z.B. Luftführung, Luftverteilung, Anbringung eines Lüfters, Anbringung von Aufsatzkühlern, Lagerschilden, Klemmenkasten etc. erfolgen nunmehr ausschließlich über den einen oder die weiteren Anschlussabschnitte des Gehäuses. Bei zwei Anschlussabschnitten befindet sich der Blechpaketabschnitt zwischen diesen beiden Anschlussabschnitten. Funktionen bzw. Anschlussmöglichkeiten des Anschlussabschnitts, die nicht genutzt werden, beispielsweise weil nur eine Fremdkühlung, aber kein Aufsatzkühler vorgesehen ist, können durch Abdeckungen, Blindstopfen bzw. Blindabdeckungen am Anschlussabschnitt abgedeckt bzw. geschlossen werden.

Dies vereinfacht den grundsätzlichen Aufbau des Gehäuses erheblich, da nunmehr bei einer Achshöhe einer dynamoelektrischen Maschine nur ein Gehäuse vorzusehen ist, mit dem sämtliche Anschlussmöglichkeiten, Kühlmöglichkeiten etc. realisierbar sind.

Beispielsweise können somit sämtliche Kühlarten einzeln oder in Kombination, wie z.B. eigen- oder fremdbelüftet, wassergekühlt oder wassergekühlt mit Fremdbelüftung, als auch ein separater Aufsatzkühler realisiert werden. Je nach Einsatzort und klimatischen Anforderungen lässt sich somit in einfacher Art und Weise die dynamoelektrische Maschine bei optimalem Wirkungsgrad an die Gegebenheiten anpassen.

Dabei wird über die axialen Ausnehmungen der Bleche ein Luftstrom oder eine Flüssigkeit geführt. Bei einer Flüssigkeitskühlung ist es unter anderem aus Dichtigkeitsgründen besonders vorteilhaft wenn dafür in den Ausnehmungen Rohre vorgesehen sind, die mit dem Blechpaket in thermisch leitfähiger Verbindung stehen. Dies geschieht beispielsweise durch thermisch leitfähiges Vergussmaterial und/oder Verstemmen und/ oder axiales Einpressen und/oder hydraulisches Aufweiten der Rohre in den Ausnehmungen des Blechpakets.

Die Ausnehmungen sind als geschlossene Kontur innerhalb der Bleche zwischen dem Jochrücken und dem äußeren Rand oder als Kühlrippen bzw. Klammernuten für Rohre an der äußeren Fläche des Blechpakets angeordnet.

Vorteilhafterweise ist die Lage des Klemmenkastens durch das sehr einfach aufgebaute Gehäuse mit seinen Anschlussabschnitten nahezu frei wählbar, da die Anbringung des Klemmenkasten nur an den Anschlussabschnitt und nicht an bestimmte Aufnahmeflächen, wie z.B. bei einem Rippengehäuse gebunden ist.

Vorteilhafterweise ist das Blechpaket des Stators mit einer achteckigen Querschnittsform versehen, wobei in Umfangsrichtung betrachtet kürzere und längere Seiten abwechselnd angeordnet sind. Dabei befindet sich die Umfangsrichtung in einer gedachten Ebene, die senkrecht auf der virtuellen Maschinenachse angeordnet ist.

Diese Querschnittsform vereinfacht u.a. den Herstellungsprozess, insbesondere, wenn man sich vorstellt, dass diese Bleche aus abgewickelten Blechcoils gestanzt werden.

Die Anlagebereiche sind vorteilhafterweise an den kürzeren Seiten der Bleche bzw. des Blechpakets vorgesehen, so dass zwischen einer Seitenwand des Blechpaketsabschnitts des Gehäuses und einer längeren Seite des Blechpakets ein vorgegebener Abstand einstellbar ist. In diesen Freiraum sind beispielsweise Geräuschdämmmatten einlegbar. Durch den minimierten Kontakt von Blechpaket und Gehäuse reduzieren sich erfindungsgemäß die Lärmemissionen der dynamoelektrischen Maschine.

Des Weiteren ergibt sich durch die erfindungsgemäße dynamoelektrische Maschine mit ihrem selbsttragenden Gehäuse und ihrem Blechpaket ein optimierter Materialeinsatz, da nunmehr die Ecken des Blechpakets im Gegensatz zu einem runden Blechpaket mit verwendet werden können. Des Weiteren ergibt sich durch die Verwendung des selbsttragenden Gehäuses eine hohe Steifigkeit.

Sind die Seitenwände des Blechpaketsabschnitts geschlossen, ist das Blechpakets gegen Spritzwasser aus allen Richtungen geschützt.

Durch Verwendung dieses selbsttragenden Gehäuses bei einer dynamoelektrischen Maschine werden vergleichsweise technisch und finanziell aufwändige Topflagerschilde vermieden. Weniger aufwändige Lagerschilde werden dabei nun erfindungsgemäß in den Anschlussabschnitten angeordnet.

Das Blechpaket des Stators ist vorteilhaftweise an seinen Stirnseiten mit Druckplatten beaufschlagt, die die einzelnen axial geschichteten Bleche miteinander axial verpressen.

Nach einem Ausführungsbeispiel entsprechen die Druckplatten im Bereich der Statorbohrung und/oder der Nuten als auch eventueller Kühlausnehmungen den Abmessungen der Bleche, sind jedoch in ihrem Außendurchmesser größer als die einzelnen Bleche. Dadurch ergibt sich der Vorteil, dass ausschließlich die Druckplatten an den vorgegebenen Anlagebereichen der Innenseite des Blechpaketsabschnitts des Gehäuses zum Liegen kommen. Damit stellt sich zwischen den Seiten des Blechpakets, das vorteilhafterweise eine achteckige Grundform mit kürzeren und längeren Blechpaketseiten aufweist, ein Freiraum zwischen der Oberfläche des Blechpakets und der Innenseite des Blechpaketsabschnitts ein.

In diesen Freiraum sind nunmehr Dämmmaterialien einsetzbar, vorteilhafterweise bereits vorgefertigte Dämmmatten, die auf vorgegebene Schwingungsfrequenzen und Geräuschfrequenzen von Motor und/oder einem an den Motor angeschlossenen Umrichter abstimmbar sind und so speziell bekannte Frequenzen ausfiltern.

Durch die innenliegende Anordnung der Dämmmaterialien sind diese nunmehr von äußeren Einflüssen, wie Witterung, aggressiven Medien oder mechanischer Beschädigung geschützt und bleiben somit länger in ihrer Funktion erhalten. Außerdem sind die Dämmmatten in einem abgeschlossenen Freiraum und können so nicht durch Vibrationen des Blechpakets in Richtung der Wicklung oder des Läufers rutschen und so in die drehenden Massen geraten.

Vorteilhafterweise sind die Dämmmatten am Blechpaket oder an der Innenseite des Blechpaketsabschnitts oder an der Innenseite der Gehäuseabdeckplatten, also den Seitenwänden geklebt, geschraubt oder durch Halteösen befestigt. Diese Dämmmatten führen zu einer Geräuschreduzierung, wie sie insbesondere bei einem Betrieb der dynamoelektrischen Maschine am Umrichter äußerst wichtig ist. Durch diese zusätzliche Maßnahme sind Geräuschgrenzwerte ohne Änderungen an der Umrichter-Steuerung einzuhalten. Damit können Umrichter weiter mit einer niedrigen Taktfrequenz an erfindungsgemäßen dynamoelektrischen Maschinen betrieben werden.

In einer weiteren Ausführungsform entsprechen die Druckplatten in ihrem Querschnitt den Blechen. Damit liegen nun die kürzeren Seiten des Blechpakets und die der Druckplatten an der Innenseite des Blechpaketabschnitts des Gehäuses in den dafür vorgesehenen Anlagebereichen an. Somit ergeben sich zwischen Oberfläche des Blechpakets und der Innenseite des Blechpaketsabschnitts Anlagebereiche, die über die gesamte axiale Länge des Blechpakets verlaufen. In die Freiräume zwischen den längeren Seiten des Blechpakets und den dazu korrespondierenden Innenseiten der Blechpaketabschnitte des Gehäuses sind Dämmmaterialien, insbesondere Dämmmatten mit den oben beschriebenen vorteilhaften Auswirkungen in der oben ausgeführten Art und Weise einsetzbar.

Die Erfindung sowie weitere vorteilhafte Ausgestaltungen der Erfindung werden im Weiteren anhand von prinzipiell dargestellten Ausführungsbeispielen näher erläutert. Darin zeigen:
- FIG 1, 2: prinzipielle Längsschnitte zweier Ausführungsformen,
- FIG 3: einen Querschnitt durch eine Ausführungsform nach FIG 1,
- FIG 4: einen Querschnitt einer Ausführungsform mit Dämmmatten,
- FIG 5 bis 11: Ausführungsformen unterschiedlicher Blechpakete,
- FIG 12: Gehäuse mit einem Blechpaket,
- FIG 13: perspektivische Darstellung
- FIG 14, 15: unterschiedliche Anordnungen von Kühlvorrichtungen an einem Gehäuse,
- FIG 16: prinzipieller Flüssigkeitskühlanschluss an einem Gehäuse,
- FIG 17, 18: Aufsatzkühler bzw. Aufsatzumrichter an einem Gehäuse,
- FIG 19: die Anordnung eines Klemmenkastens an dem Gehäuse,
- FIG 20, 21: Wasserkühlung bei verschiedenen Blechpaketen,
- FIG 22: Schutzrohr für Kühllöcher,
- FIG 23: Schutzrohr für Kühllöcher und Kühlrippen,
- FIG 24 bis 27: weitere Ausführungsformen des Gehäuses,
- FIG 28: perspektivische Darstellung einer dynamoelektrischen Maschine.

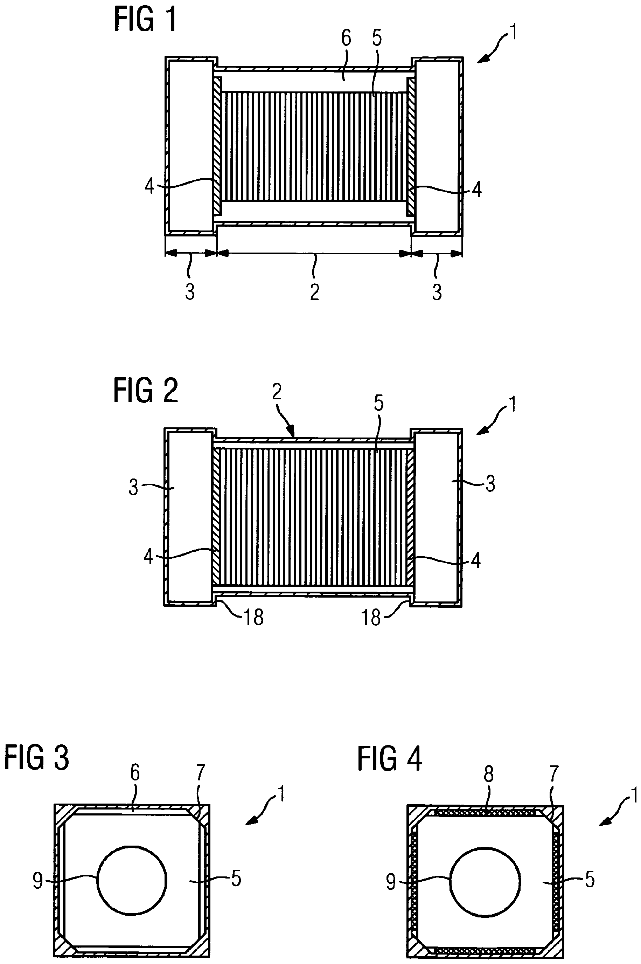

FIG 1 zeigt in einer prinzipiellen Darstellung einen Längsschnitt eines erfindungsgemäßen selbsttragenden Gehäuses 1 einer dynamoelektrischen Maschine 23 mit einem Stator 22, dessen Blechpaket 5 durch Druckplatten 4 an den Stirnseiten gebildet ist.

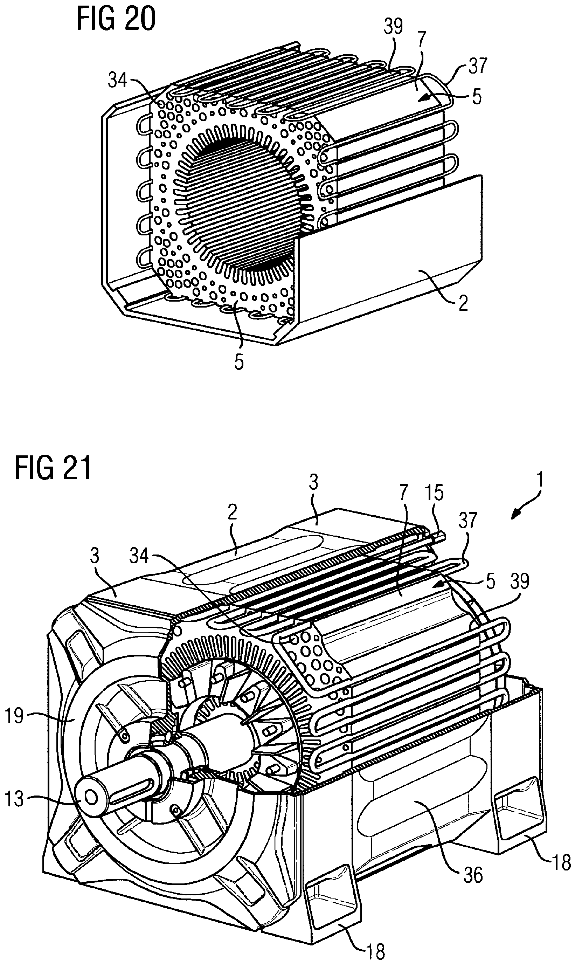

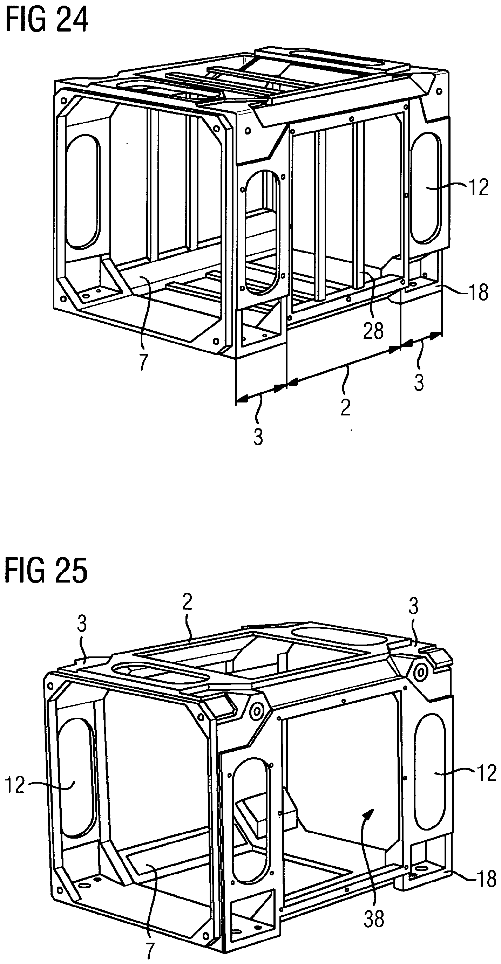

Bei der Konstruktionsart eines selbsttragenden Gehäuse 1 sind Aufnahmebleche, Verstärkungen, Profile und Beplankungen mit unterschiedlichen Fügetechniken (Löten, Schweißen, Kleben) unlösbar miteinander verbunden, so dass ein einstückiges Gehäuse 1 vorliegt. Die tragende Funktion wird dabei allein durch die Gehäusestruktur übernommen. Die Steifigkeit wird durch die kompakte Gehäusestruktur durch ggf. hohle Gehäuseteile mit möglichst großem Querschnitt und somit hohem Widerstandsmoment erreicht. Sicken, Eindellungen etc., wie beispielsweise in FIG 21 und FIG 25, erhöhen die Steifigkeit des Gehäuses 1.

Die Druckplatten 4 paketieren das Blechpaket 5 und drücken es axial zusammen, so dass sich äußerst enge Spalte zwischen den einzelnen Blechen ergeben. Dennoch kann durch Kapillarwirkung Staub bzw. Feuchtigkeit in diese Spalte eindringen. Das Gehäuse 1 weist einen Blechpaketabschnitt 2 und daran axial anschließende Anschlussabschnitte 3 auf. Die Anschlussabschnitte 3 und Blechpaketabschnitt 2 weisen in dieser Darstellung unterschiedliche Höhen auf. Die Anschlussabschnitte 3 können ebenso mit gleichem Querschnitt, gleicher Höhe oder so wie auch FIG 1 zu entnehmen, mit größerem Querschnitt ausgebildet sein.

In diesem Fall bilden dabei die unteren Abschnitte der Anschlussbereiche 3 gleichzeitig Füße, auf die die dynamoelektrische Maschine 23 im Betrieb zu stellen ist. Das Blechpaket 5 ist, wie diese Darstellung eindeutig zeigt, innerhalb des Blechpaketabschnitts 2 angeordnet Der Blechpaketabschnitt 2 des Gehäuses 1 hat keine weiteren Funktion oder Anschlussmöglichkeiten. Er dient der Positionierung und ggf. dem Schutz des Blechpakets 5. Zur Montage ist es lediglich vorteilhaft wenn die Anschlussbereiche 3 und/oder der Blechpaketabschnitt 2 Mittel zur Anbringung von Transportösen 27, z.B. Gewindeeinsätze vorsehen.

FIG 2 zeigt einen Längsschnitt einer dynamoelektrischen Maschine 23, wobei die Unterschiede zwischen FIG 1 darin bestehen, dass die Bleche des Blechpakets 5, als auch die Druckplatten 4 den im Wesentlichen gleichen Durchmesser und einen ähnlichen Querschnitt aufweisen. Das gesamte Blechpaket 5 ist dabei ebenso im Blechpaketabschnitt 2 angeordnet.

In FIG 1 stützen sich nur die Druckplatten 4 an der Innenseite des Blechabschnitts 2 des Gehäuses 1 in den vorgesehenen Anlagebereichen 7 ab. Während in FIG 2 sowohl die Druckplatten als auch die vorgegebenen Bereiche des Blechpakets 5 an den Anlagebereichen 7 des Blechpaketsabschnitts 2 anliegen, wie dies der FIG 3 zu entnehmen ist.

FIG 3 zeigt, dass insbesondere der Blechpaketabschnitt 2 des Gehäuses 1 in seiner äußeren Grundform im Querschnitt betrachtet viereckig, achteckig oder auch noch mit weiteren Ecken, also grundsätzlich als Polygon ausgebildet sein kann. Die Innenseite des Blechpaketsabschnitts 2 des Gehäuses 1 bildet ein Achteck, das insbesondere an den kürzeren Innenseiten Anlagebereiche 7 für das Blechpaket 5 und/oder nur für die Druckplatten 4 des Blechpakets 5 bildet.

In die sich ergebenden Freiräume 6 zwischen Innenseite des Blechpaketsabschnitts 2 und der Oberfläche des Blechpakets 5 werden, wie FIG 4 zeigt, vorgefertigte Dämmmatten 8 eingelegt, die vorteilhafterweise auf gewisse Frequenzen der die dynamoelektrische Maschine 23 elektrisch versorgenden Umrichter abgestimmt sind. Somit kann der Umrichter 17 weiter mit einer niedrigen Taktfrequenz betrieben werden. Die Dämmmatten 8 haben eine sehr einfache rechteckige Form und können bereits vorgefertigt bezogen werden. Sie sind bei geschlossenen Seitenwänden des Gehäuses 1 von außen nicht sichtbar. Aufgrund der innenliegenden Anordnung sind die Dämmmatten 8 vor äußeren Einflüssen, wie Witterung oder mechanischer Beeinträchtigung oder ein Verrutschen geschützt.

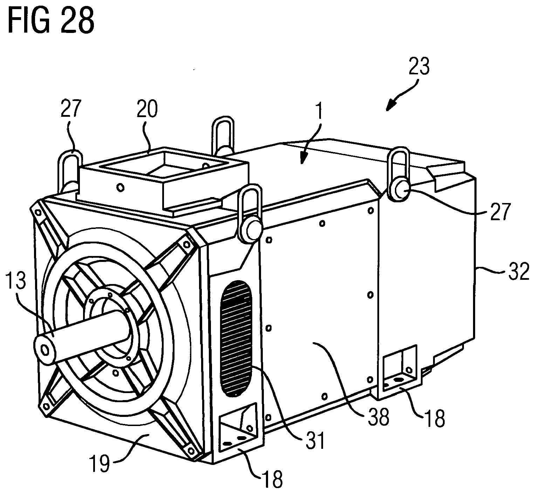

Außerdem werden die Dämmmatten 8 vorteilhafterweise durch Klebung, Verschraubung oder zusätzliche Halteösen an der Innenseite des Blechpaketsabschnitts 2 oder am Blechpaket 5 fixiert, so dass ein Verrutschen innerhalb des Freiraumes 6 ausgeschlossen ist. Damit wird vermieden, dass die Dämmmatten 8 in den Bereich der Wicklung des Stators 22 oder rotierender Teilen der dynamoelektrischen Maschine 23 gelangen. Auch an der Innenseite separater Seitenwänden 38, wie z.B. FIG 28 dargestellt, können die Dämmmatten angebracht sein.

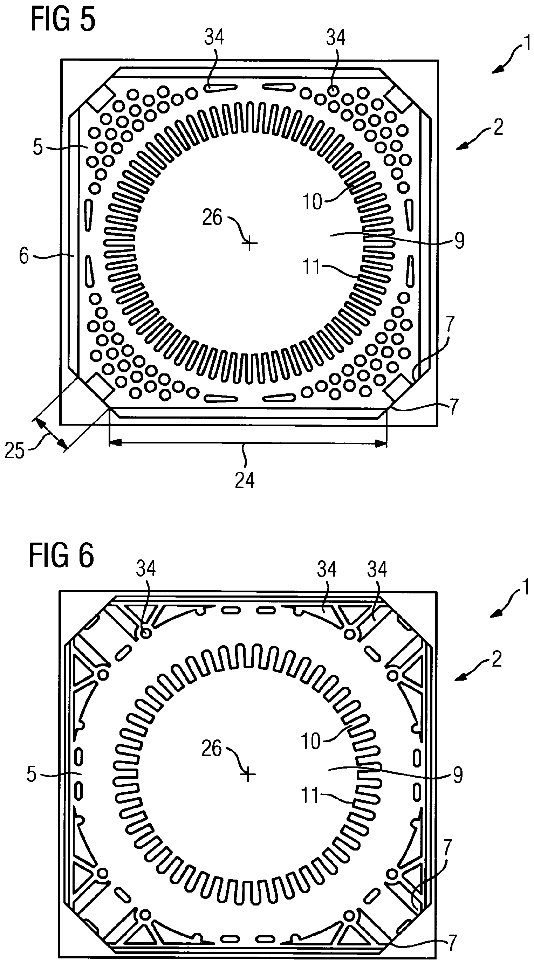

FIG 5 bis FIG 11 zeigen prinzipielle Bleche des Blechpakets 5, das in dem Blechpaketabschnitt 2 angeordnet ist. Die Bleche weisen grundsätzlich eine achteckige Grundform auf, die trotz oberflächenvergrößernder Maßnahmen wie Kerbungen, Ausnehmungen am äußeren Umfang oder innerhalb des Blechs nicht verlassen wird. Die achteckige Grundform weist dabei kürzere Seiten 25 und längere Seiten 24 auf, die sich in Umfangsrichtung abwechseln und so eine Positionierung und Fixierung des Blechpakets 5 über dessen kürzere Seiten 25 und die Anlagebereiche 7 an der Innenseite des Blechpaketsabschnitts 2 des Gehäuses 1 ermöglichen. Die Bleche weisen grundsätzliche eine Statorbohrung 9 auf, die von Nuten 10 und Zähnen 11 der Bleche umgeben ist. Die Bleche sind dabei jeweils senkrecht zu einer virtuellen Achse 26 angeordnet.

Die Ausnehmungen 34 in den Blechen und letztendlich auch im Blechpaket 5, die axial verlaufen, sind geeignet Kühlrohre einer Flüssigkeitskühlung der dynamoelektrischen Maschine 23 aufzunehmen und/oder dienen als Lüftungskanäle für Eigen- oder Fremdbelüftung. Die am Außenumfang angeordneten Kühlrippen 33 sind insbesondere durch die Formgestaltung so ausgeführt, dass diese auch als Klammernuten 39 für einschnappbare Kühlrohre 37 einer Flüssigkeitskühlung geeignet sind.

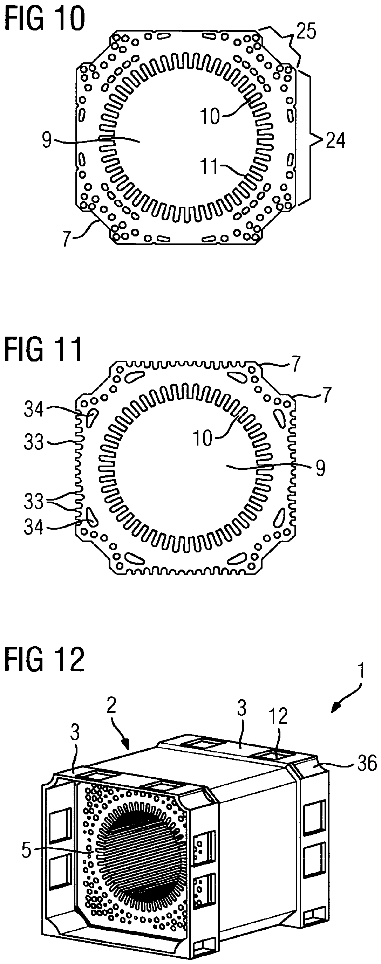

Von FIG 10 abgesehen, ist der Jochrücken des Stators 22 frei von Ausnehmungen, so dass der Feldlinienverlauf der durch ein Wicklungssystem in den Nuten 10 hervorgerufenen Magnetfeldes nicht beeinträchtigt wird. Als Jochrücken wird dabei ein im wesentlicher ringförmiger Bereich der Bleche verstanden, der sich an die Nuten radial nach außen anschließt.

Der Jochrücken erstreckt sich ohne irgendwelche Ausnehmungen radial vorzugsweise zumindest dabei um eine halbe Nuttiefe.

Mit anderen Worten der ringförmige Bereich des Jochrückens weist in seiner radialen Ausdehnung zumindest einen Wert auf, der der halben Nuttiefe des jeweiligen Blechs bzw. Blechpakets entspricht.

FIG 10 zeigt zusätzliche Ausnehmungen im Bereich des Jochrückens, die im Wesentlichen gegenüber der jeweils kürzeren Seite 25 angeordnet sind. Damit können vorhandene Wärmequellen zusätzlich gekühlt werden.

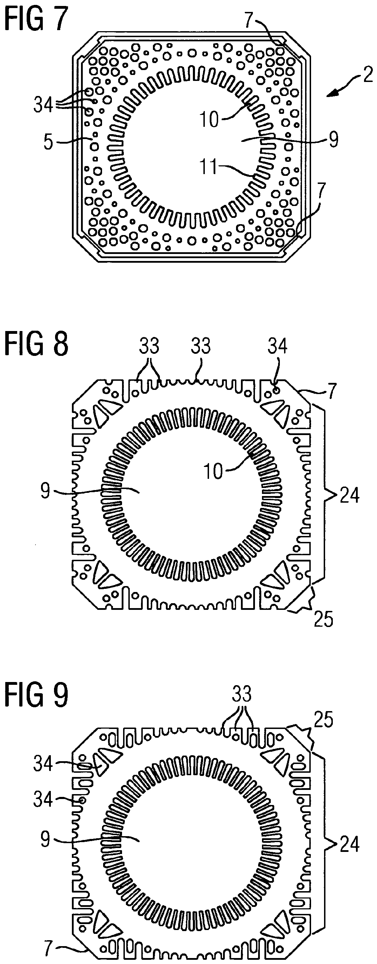

FIG 12 zeigt in perspektivischer Darstellung ein Blechpaket 5 in dem Gehäuse 1, wobei das Blechpaket 5 aus Blechen gemäß FIG 7 gebildet ist. Dabei wurde das Blechpaket 5 axial durch einen Anschlussabschnitt 3 in den Blechpaketabschnitt 2 eingeschoben. Vorteilhafterweise weist dabei der andere Anschlussabschnitt 3 oder der Blechpaketabschnitt 2 einen Endanschlag auf, der eine definierte Einschubtiefe des Blechpakets 5 in das Gehäuse 1 gestattet.

Die Anschlussabschnitte 3 weisen Öffnungen 12 auf, die u.a. zur Anbringung von Kühlkanälen, Klemmenkästen etc. geeignet sind. Des Weiteren weisen die Anschlussabschnitte 3 in ihren Ecken Sicken 36 auf, die die Steifigkeit des Gehäuses 1 verbessern.

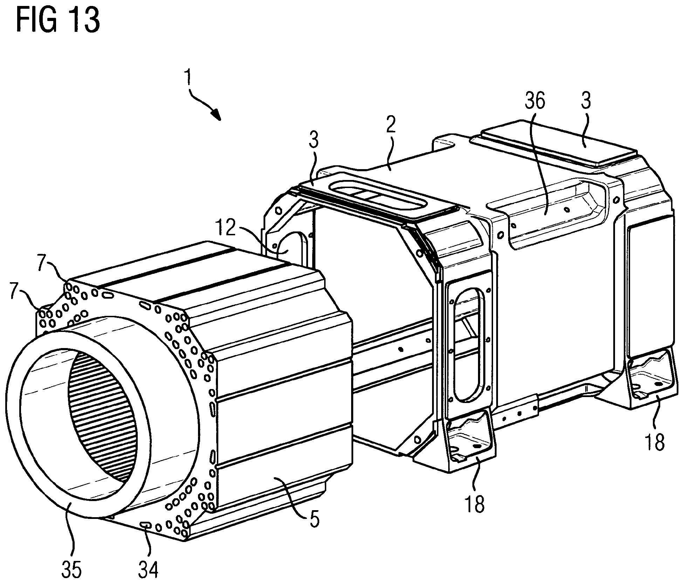

FIG 13 zeigt den Montagevorgang an einem zu FIG 12 ähnlichen Gehäuse 1, dabei wird das Blechpaket 5 mit einer nicht näher dargestellten Wicklung und einer Schutzhaube 35, je nach Ausführung der Schutzart gemäß IEC 34-5, axial in das Gehäuse 1 eingesetzt.

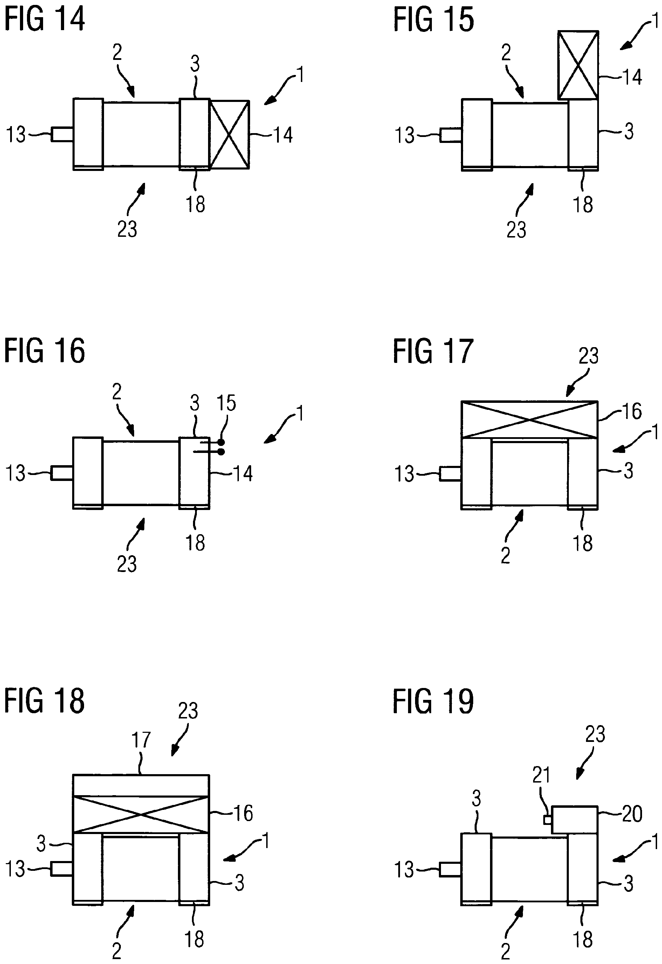

FIG 14 zeigt, wie die folgenden Figuren Ausführungsbeispiele des erfindungsgemäßen Konzeptes, nämlich dass nunmehr nur über die Anschlussabschnitte 3 Lüftervorrichtung 14, Klemmkasten 20 etc. angebracht werden. So zeigt FIG 14 eine an den Anschlussabschnitt 3 axial anschließbare Lüftervorrichtung 14. Damit ist beispielsweise eine Fremdkühlung der dynamoelektrischen Maschine 23 möglich. Der Blechpaketabschnitt 2 bleibt davon unberührt.

Des Weiteren kann nach FIG 15 ebenfalls eine Kühlvorrichtung oder ein Fremdkühler oberhalb des Anschlussabschnitts 3 angeordnet werden.

FIG 16 zeigt die prinzipielle Möglichkeit eines Anschlusses 15 einer Flüssigkeitskühlung an die dynamoelektrische Maschine 23. Selbstverständlich sind dafür in den Ausnehmungen 34 (siehe insbesondere FIG 5 bis 11) innerhalb des Blechpakets 5 oder an dem Blechpaket 5 des Stators 22 Kühlrohre 37 anzuordnen und strömungsmäßig an den Stirnseiten des Blechpakets 5 innerhalb der Anschlussbereiche 3 zu verschalten.

FIG 17 zeigt in einer weiteren Ausführungsform das Gehäuse 1 mit seinem Blechpaketabschnitt 2 und den beiden Anschlussabschnitten 3. Die Öffnungen 12 des Anschlussabschnitte 3 münden in einen Wärmetauscher 16, vorteilhafterweise Luft-Luft oder Luft-Wasser-Wärmetauscher wobei die erwärmte bzw. rückgekühlte Kühlluft über dafür vorgesehene Öffnungen 12 der Anschlussabschnitte 3 der dynamoelektrischen Maschine 23 ab- bzw. zuführt wird. Der Blechpaketabschnitt 2 bleibt davon unberührt.

FIG 18 zeigt ergänzend zur Ausführungsform gemäß FIG 17, einen Umrichter 17, der auf dem Wärmetauscher 16 positioniert ist oder mit dem Wärmetauscher 16 zusammen eine bauliche Einheit bildet. Der Umrichter 17 wird durch den Wärmetauscher 16 mitgekühlt. Die elektrischen Anschlussleitungen werden dafür durch den Wärmetauscher 16 und über den Anschlussabschnitt 3 dem Wicklungssystem des Stator 22 der dynamoelektrischen Maschine 23 zugeführt.

FIG 19 zeigt einen Klemmenkasten 20 am Anschlussabschnitt 3, wobei der Klemmenkasten 20 mit der Ausrichtung seines externen elektrischen Anschlusses 21, der in unterschiedlichste Richtungen mittels eines insbesondere arretierbaren Drehmechanismus einstellbar ist.

Sämtliche Anschlusselemente wie Klemmenkasten 20 Wärmetauscher 16, Umrichter 17 etc. sind allein oder in beliebiger Kombination an den Anschlussabschnitten 3 anbringbar und über die Öffnungen 12 mit der Wicklung, oder Kühleinrichtungen der dynamoelektrischen Maschine 23 etc. kontaktierbar.

Um die Bauformen nach IEC 34-7 zu realisieren sind nunmehr die erforderlichen Flansche, Füße 18 etc. nur an den Anschlussabschnitten 3 vorgesehen.

FIG 20 zeigt ein um das Blechpaket 5 mäanderförmig angeordnetes Kühlsystem, dessen Kühlrohre 37 am Umfang des Blechpaktes 5 in Klammernuten 39 angeordnet sind. Die weiteren Ausnehmungen 34 innerhalb des Blechpakets 5 dienen vor allem der Lüftkühlung. Der Blechpaketabschnitt 2 ist aus darstellerischen Gründen in dieser FIG axial wesentlich länger ausgebildet als das Blechpaket 5 um die Anlagebereich 7 besser zeigen zu können.

FIG 21 zeigt in einer weiteren Darstellung ein aufgeschnittenes Gehäuse 1, das an den Anschlussabschnitten 3 Lagerschilde 19 vorsieht, in denen ein Rotor gelagert ist. Der Rotor ist in diesem Fall als Kurzschlussläufer ausgebildet - er kann beispielsweise auch ein permanenterregter Läufer einer Synchronmaschine sein.

Ebenso ist, wie auch in FIG 20 dargestellt eine Flüssigkeitskühlung am Umfang des Blechpakts 5 angeordnet. Der Anschluss 15 für die Flüssigkeitskühlung befindet sich auf der B-Seite der dynamoelektrischen Maschine 23, also auf der dem Wellenstumpf 13 gegenüberliegenden Seite. Der Stator 22 ist aus Gründen der Übersichtlichkeit ohne Wicklungssystem dargestellt.

Sicken 36 verstärken den Blechabschnitt 2. Füße 18 befinden sich in den Anschlussabschnitten 3.

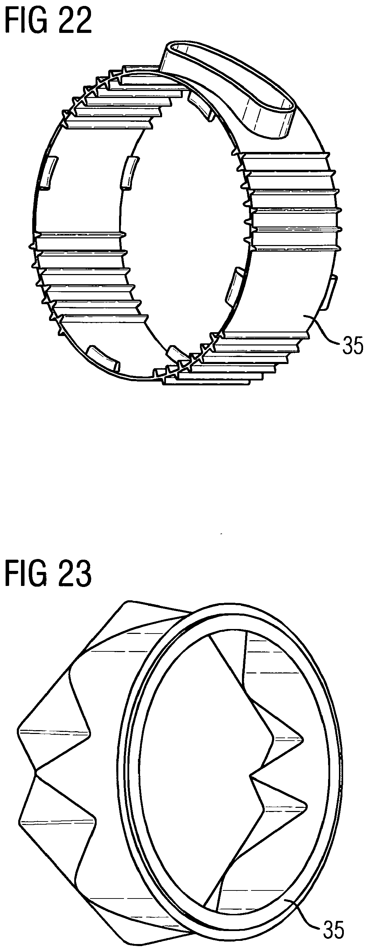

FIG 22 und FIG 23 zeigen jeweils Schutzhauben 35, die das Wicklungssystem und/oder die Kühlrohre 37 abdecken und so gegen äußere Einflüsse je nach Anforderungen der Schutzart gemäß IEC 43-5 schützen. Rippen oder Sicken versteifen dabei die Schutzrohre 35.

FIG 25 zeigt ein Gehäuse 1, bei dem der erfindungsgemäße Grundgedanke gegenüber den bisher beschriebenen Ausführungsformen erhalten blieb, jedoch im Blechpaketabschnitt 2 die Seitenwände 38 offen sind. Damit wird ebenfalls eine vergleichsweise höhere Steifigkeit gegenüber gehäuselosen Maschinen erreicht.

Vorzugsweise sind die ursprünglichen Seitenwände 38 austauschbar. Jede Lücke kann durch unterschiedlichste Seitenwände verschlossen werden. Durch Seitenwände 38 mit anderem (Kunststoff, GFK, Stahl ...) bzw. dickerem oder dünnerem Material, sind die Schwingungseigenschaften des Gehäuses 1 beeinflussbar. Seitenwände 38 weisen in einer weiteren Ausführungsform einen Einsatz auf, der in den Freiraum 6 ragt. Dies sind beispielsweise geschlossene oder gelochte Halteelemente für Dämmmaterial.

Um jedoch die Steifigkeit weiter zu erhöhen, sind, sofern erforderlich, wie in FIG 24 gezeigt, in den verbleibenden Öffnungen der offenen Seitenwände Stege 28 vorgesehen.

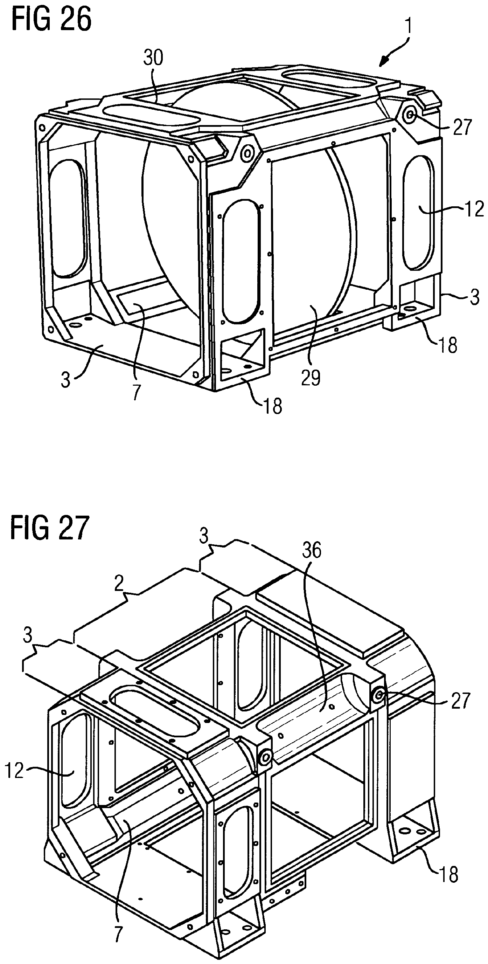

Durch die fehlenden Seitenwände 38 des Blechabschnitts 2 lassen sich, wie FIG 26 zeigt, die Anlagebereiche 7 beispielsweise mit einem Drehmeißel besonders gut bearbeiten, da die Arbeitsbereiche 29 eines Drehmeißels einer Werkzeugmaschine über die Begrenzungskanten 30 ragen.

FIG 27 zeigt in perspektivischer Darstellung ein Gehäuse 1, mit offenen Seitenwänden, das an den axialen Enden seines Blechpaketabschnitts 2 Materialanhäufungen aufweist, die zur Anbringung einer Transportöse 27 besonders geeignet sind. Eine Öffnung 12 des rechten Anschlussabschnitts 3 ist beispielhaft durch eine Abdeckung verschlossen. Damit lassen sich die nicht durch Funktionselemente wie Kühler, Klemmenkasten 20 belegten Öffnungen 12 derart abdecken, dass die jeweilige Schutzart erhalten bleibt.

FIG 28 zeigt eine dynamoelektrische Maschine 23 in einer möglichen Ausführungsform des beschriebenen Plattformkonzepts, wobei aus dem einen Anschlussabschnitt 3 ein Wellenstumpf 13 ragt, der in einem Lagerschild 19 in diesem Anschlussbereich 3 gehalten ist. Des Weiteren sind die Öffnungen 12 dieses Anschlussbereichs 3 mit einem Lüftungsgitter 31 und einem Klemmenkasten 20 versehen. Ebenso sind Transportösen 27 in den Anschlussabschnitten 3 angebracht. Der andere Anschlussabschnitt 3 weist eine axial ausgerichtete Lüftungshaube 32 auf. Die Seitenwand 38 ist durch Schraubverbindungen verschlossen

## Patentansprüche

1. Dynamoelektrische Maschine (23) mit einem selbsttragenden Gehäuse (1), das einen Blechpaketabschnitt (2) und zumindest einen Anschlussabschnitt (3) in axialer Verlängerung des Blechpaketabschnittes (2) aufweist, wobei der Blechpaketabschnitt (2) ein aus axial geschichteten Blechen gebildetes Blechpaket (5) eines Stators (22) aufnimmt, fixiert und zumindest abschnittsweise durch geschlossene oder verschlossene Seitenwände allseitig umgibt, wobei die einzelnen Bleche eine äußere Grundform mit einem Querschnitt aufweisen mit
- einer Statorbohrung (9), die von radial angeordneten am Umfang der Statorbohrung (9) gleichmäßig verteilten Nuten (10) umgeben ist,
- einem radial daran anschließenden Jochrücken, der in äquidistantem Abstand zur Statorbohrung (9) verläuft,
- und axialen Ausnehmungen (34) des Bleches in Bereichen zwischen Jochrücken und der äußeren Grundform der Bleche,
wobei der Blechpaketabschnitt (2) des selbsttragenden Gehäuses (1) der Fixierung des Blechpakets (5) des Stators (22) über festgelegte Anlagebereiche (7) zwischen Blechpaketabschnitt (2) des Gehäuses (1) und Blechpaket (5) dient, **dadurch gekennzeichnet, dass** die das Blechpaket (5) des Stators (22) bildenden axial hintereinander angeordneten Bleche an ihren äußeren Seiten - von den Anlagebereichen (7) abgesehen - als oberflächenvergrößernde Strukturen Ausnehmungen (34) aufweisen, wobei die Ausnehmungen (34) als Kühlrippen (33) an der äußeren Fläche des Blechpakets (5) angeordnet sind ohne die äußere Grundform der Bleche zu verlassen, wobei der Blechpaketabschnitt (2) eckig und das Blechpaket (5) eckig sind, wobei die einzelnen Bleche die äußere Grundform mit insbesondere achteckigen Querschnitt aufweisen.

2. Dynamoelektrische Maschine (23) nach Anspruch 1, **dadurch gekennzeichnet, dass** die Ausnehmung (34) an der Oberfläche dieses Bereiches als Kühlrippe (33) und/oder Klammernut (39) für Kühlrohre (37) ausgebildet ist.

3. Dynamoelektrische Maschine (23) nach Anspruch 1 oder 2, **dadurch gekennzeichnet, dass** zumindest eine vorgebbare Anzahl von Ausnehmungen (34) innerhalb dieses Bereiches geeignet ist Kühlrohre (37) aufzunehmen.

4. Dynamoelektrische Maschine (23) nach Anspruch 1 oder 2, **dadurch gekennzeichnet, dass** zumindest in einer vorgebbaren Anzahl von Ausnehmungen (34) innerhalb dieses Bereiches Kühlrohre (37) aufgenommen sind.

5. Dynamoelektrische Maschine (23) nach Anspruch 4, **dadurch gekennzeichnet, dass** die Kühlrohre (37) einen geschlossenen Flüssigkeitskreislauf bilden.

6. Dynamoelektrische Maschine (23) nach Anspruch 5, **dadurch gekennzeichnet, dass** der Flüssigkeitskreislauf mäanderförmig um den Jochrücken verläuft.

7. Dynamoelektrische Maschine (23) nach einem der vorhergehenden Ansprüche, **dadurch gekennzeichnet, dass** ausschließlich oder ergänzend eine Luftkühlung der dynamoelektrischen Maschine (23) vorgesehen ist.

8. Dynamoelektrische Maschine (23) nach einem der vorhergehenden Ansprüche, **dadurch gekennzeichnet, dass** der Blechpaketabschnitt (2) an der Innenseite vorgebbare Anlagebereiche (7) des Blechpaketes (5) des Stators (22) am Blechpaketabschnittes (2) des Gehäuses (1) zur Positionierung und Fixierung des Blechpaketes (5) aufweist.

9. Dynamoelektrische Maschine (23) nach Anspruch 8, **dadurch gekennzeichnet, dass** das Blechpaket (5) des Stators (22) mittels Druckplatten (4) paketiert ist, wobei nur die Druckplatten (4) oder das Blechpaket (5) und die Druckplatten (4) mit zumindest einem Abschnitt ihrer in Umfangsrichtung betrachtet kürzeren Seiten (25) an den Anlagenbereichen (7) anliegen.

10. Dynamoelektrische Maschine (23) nach Anspruch 8 oder 9, **dadurch gekennzeichnet, dass** ausschließlich über den Anschlussabschnitt (3) des Gehäuses (1) Anbauelemente wie Kühlsysteme, Klemmkasten (20), Lagerschilde (19) oder Kühlaggregate für Stator (22) und/oder einen Rotor vorgesehen sind.

## Claims

1. Dynamo-electric machine (23) having a self-supporting housing (1), which comprises a laminated core section (2) and at least one connecting section (3) in an axial extension of the laminated core section (2), wherein the laminated core section (2) receives, secures and at least sectionally surrounds, by means of closed or sealed side walls, all sides of a laminated core (5) of a stator (22) formed from axially layered sheets, wherein the individual sheets have a basic outer shape with a cross-section having
- a stator bore (9) which is surrounded by radially arranged grooves (10) which are evenly distributed along the periphery of the stator bore (9),
- a yoke back that radially adjoins the grooves, which extends equidistantly from the stator bore (9),
- and axial recesses (34) in the sheet in the regions between the yoke back and the basic outer shape of the sheet,
wherein the laminated core section (2) of the self-supporting housing (1) is used to secure the laminated core (5) of the stator (22) across defined contact areas (7) between the laminated core section (2) of the housing (1) and laminated core (5),
**characterised in that**
the sheets arranged axially one behind the other and forming the laminated core (5) of the stator (22) have recesses (34) on their outer sides, irrespective of the contact areas (7), as surface-enlarging structures, wherein the recesses (34) are arranged as cooling ribs (33) on the outer surface of the laminated core (5) without departing from the basic outer shape of the sheets, wherein the laminated core section (2) is angular and the laminated core (5) is angular, wherein the individual sheets have the basic outer shape with in particular an octagonal cross-section.

2. Dynamo-electric machine (23) according to claim 1, **characterised in that** the recess (34) on the surface of this area is embodied as a cooling rib (33) and/or clamp recess (39) for cooling tubes (37).

3. Dynamo-electric machine (23) according to claim 1 or 2, **characterised in that** at least one predeterminable number of recesses (34) within this area is suited to receiving cooling tubes (37).

4. Dynamo-electric machine (23) according to claim 1 or 2, **characterised in that** cooling tubes (37) are received at least in a predeterminable number of recesses (34) within this area.

5. Dynamo-electric machine (23) according to claim 4, **characterised in that** the cooling tubes (37) form a closed liquid circuit.

6. Dynamo-electric machine (23) according to claim 5, **characterised in that** the liquid circuit runs in a serpentine-shape manner about the yoke back.

7. Dynamo-electric machine (23) according to one of the preceding claims, **characterised in that** an air cooling of the dynamo-electric machine (23) is provided exclusively or in addition.

8. Dynamo-electric machine (23) according to one of the preceding claims, **characterised in that** the laminated core section (2) on the interior has predeterminable contact areas (7) of the laminated core (5) of the stator (22) on the laminated core section (2) of the housing (1) for positioning and fixing the laminated core (5).

9. Dynamo-electric machine (23) according to claim 8, **characterised in that** the laminated core (5) of the stator (22) is packaged by means of pressure plates (4), wherein only the pressure plates (4) or the laminated core (5) and the pressure plates (4) with at least one section of their shorter sides (25), viewed in the peripheral direction, rest against the contact areas (7).

10. Dynamo-electric machine (23) according to claim 8 or 9, **characterised in that** add-on elements such as cooling systems, terminal boxes (20), bearing shields (19) or cooling units for stator (22) and/or a rotor are provided exclusively by way of the connecting section (3) of the housing (1).

## Revendications

1. Machine (23) dynamoélectrique comprenant une enveloppe (1) autoporteuse, qui a une partie (2) de paquet de tôles et au moins une partie (3) de connexion dans le prolongement axial de la partie (2) de paquet de tôles, la partie (2) de paquet de tôles recevant un paquet (5) de tôles, formé de tôles empilées axialement, d'un stator (22) l'immobilisant et l'entourant de tous côtés, au moins par endroit, par des parois latérales fermées ou obturées, les tôles individuelles ayant une forme de base extérieure ayant une section transversale, comprenant
- un alésage (9) de stator, qui est entouré d'encoches (10) réparties uniformément et disposées radialement sur le pourtour de l'alésage (9) du stator,
- un dos de culasse, qui s'y raccorde radialement et qui s'étend à une distance équidistante de l'alésage (9) du stator,
- et des évidements (34) axiaux de la tôle dans des parties comprises entre le dos de culasse et la forme de base extérieure des tôles,
dans laquelle la partie (2) de paquet de tôles de l'enveloppe (1) autoporteuse sert à l'immobilisation du paquet (5) de tôles du stator (22) par des parties (7) fixées d'application entre la partie (2) de paquet de tôles de l'enveloppe (1) et le paquet (5) de tôles,
**caractérisée en ce que** les tôles, disposées les unes derrière les autres axialement en formant le paquet (5) de tôles du stator (2), ont, sur leur côté extérieur - abstraction faite des parties (7) d'application - des évidements (34) comme structures d'agrandissement de la surface, les évidements (34) étant disposés sous forme d'ailettes (33) de refroidissement sur la surface extérieure du paquet (5) de tôles, sans quitter la forme de base extérieure des tôles, la partie (2) de paquet de tôles et le paquet (5) de tôles étant angulaires, les diverses tôles ayant la forme de base extérieure en ayant notamment une section transversale octogonale.

2. Machine (23) dynamoélectrique suivant la revendication 1, **caractérisée en ce que** l'évidement (34) à la surface de cette partie est constitué en ailette (33) de refroidissement et/ou en rainure (39) de cramponnage de tubes (37) de refroidissement.

3. Machine (23) dynamoélectrique suivant la revendication 1 ou 2, **caractérisée en ce qu'**au moins un nombre pouvant être donné à l'avance d'évidements (34), à l'intérieur de cette partie, est propre à recevoir des tubes (37) de refroidissement.

4. Machine (23) dynamoélectrique suivant la revendication 1 ou 2, **caractérisée en ce que** des tubes (37) de refroidissement sont reçus dans au moins un nombre pouvant être donné à l'avance d'évidements (34) à l'intérieur de cette partie.

5. Machine (23) dynamoélectrique suivant la revendication 4, **caractérisée en ce que** les tubes (37) de refroidissement forment un circuit à liquide fermé.

6. Machine (23) dynamoélectrique suivant la revendication 5, **caractérisée en ce que** le circuit à liquide s'étend sinueusement autour du dos de culasse.

7. Machine (23) dynamoélectrique suivant l'une des revendications précédentes, **caractérisée en ce qu'**il est prévu, exclusivement ou en complément, un refroidissement par de l'air de la machine (23) dynamoélectrique.

8. Machine (23) dynamoélectrique suivant l'une des revendications précédentes, **caractérisée en ce que** la partie (2) de paquet de tôles a, du côté intérieur, des parties (7) d'application pouvant être données à l'avance du paquet (5) de tôles du stator (22) à la partie (2) de paquet de tôles de l'enveloppe (1) pour la mise en position et l'immobilisation du paquet (5) de tôles.

9. Machine (23) dynamoélectrique suivant la revendication 8, **caractérisée en ce que** le paquet (5) de tôles du stator (2) est empaqueté au moyen de plateaux (4) d'application d'une pression, seuls les plateaux (4) d'application d'une pression ou le paquet (5) de tôles et les plateaux (4) d'application d'une pression s'appliquant, par au moins une partie de leur côté (25) le plus court, considéré dans la direction périphérique, aux parties (7) d'application.

10. Machine (23) dynamoélectrique suivant la revendication 8 ou 9, **caractérisée en ce qu'**il est prévu exclusivement par la partie (3) de connexion de l'enveloppe (1) des éléments rapportés comme des systèmes de refroidissement, des caissons (20) de serrage, des flasques (19) ou des groupes de refroidissement du stator (22) et/ou d'un rotor.
